# EUROPÄISCHE PATENTSCHRIFT

(11) **EP 0 584 633 B1**
(45) Veröffentlichungstag und Bekanntmachung des Hinweises auf die Patenterteilung: **23.10.1996**
(21) Anmeldenummer: 93112781.5
(22) Anmeldetag: 10.08.1993
(51) Int. Cl.: G11B 5/708

(54) **Magnetische Aufzeichnungsträger**
Magnetic recording medium
Milieu d'enregistrement magnétique

(30) Priorität: 22.08.1992 DE 4227870
(43) Veröffentlichungstag der Anmeldung: 02.03.1994
(73) Patentinhaber: BASF Magnetics GmbH, 68165 Mannheim (DE)
(72) Erfinder: Lehner, August, D-6701 Roedersheim-Gronau (DE); Schneider, Norbert, D-6701 Altrip (DE); Roller, Hermann, D-6700 Ludwigshafen (DE); Balz, Werner, Dr., D-6703 Limburgerhof (DE); Lenz, Werner, Dr., D-6702 Bad Duerkheim (DE); Kohl, Albert, D-6711 Laumersheim (DE)
(74) Vertreter: Karau, Wolfgang, Dr.

(56) Entgegenhaltungen:
- US-A- 4 743 487
- DATABASE WPI Week 8740, Derwent Publications Ltd., London, GB; AN 87-281110 &JP-A-62 195 730 (HITACHI MAXELL) 28.August 1987
- DATABASE WPI Week 9228, Derwent Publications Ltd., London, GB; AN 92-231564 & JP-AS-4 157 616 (HITACHI MAXELL) 29. Mai 1992

## Beschreibung

Die Erfindung betrifft magnetische Aufzeichnungsträger, erhalten durch Herstellen einer Dispersion von anisotropem magnetischem Material und üblichen Zusatzstoffen in einer Lösung eines polymeren Bindemittels in einem organischen Lösungsmittel, schichtförmiges Auftragen der Dispersion auf ein nichtmagnetisierbares Trägermaterial, anschließendes Ausrichten des anisotropen magnetischen Materials in einem Magnetfeld und Verfestigen der aufgebrachten Magnetschicht.

An magnetische Aufzeichnungsträger, die in modernen Audio- oder Videoaufzeichnungs- und Wiedergabegeräten verwendet werden, werden Anforderungen in mehrfacher Hinsicht gestellt. Neben den hohen Anforderungen an die Aufzeichnungs- und Wiedergabeeigenschaften für die Anwendung von Audiobändern, Videobändern und flexiblen Datenträgern, die stetig verbessert werden, wird vor allem bezüglich der mechanischen Eigenschaften eine ständige Anpassung und Verbesserung gefordert. Die Magnetschichten müssen sehr flexibel sein, eine hohe Elastizität und eine hohe Reißfestigkeit aufweisen. Außerdem wird, zur Vermeidung von Pegeleinbrüchen, zunehmend eine Verringerung der Reibungswerte, eine Erhöhung der Abrieb- und Verschleißfestigkeit, sowie eine Verbesserung der Tropenfestigkeit notwendig. Da zudem die Magnetschichten der Aufzeichnungsträger aus Gründen der Aufzeichnung immer höherer Frequenzen in gleichem Maße immer glätter werden müssen, ergibt sich das Problem, daß derart glatte Magnetschichten schon bei leicht angehobenen Temperaturen von etwa 30°C und hoher Luftfeuchtigkeit im Spielbetrieb blockieren. Besonders kritisch ist hierbei der Glättungsvorgang, da die Verdichtung der Magnetschicht bei hoher Temperatur, bis zu 100°C, und hohem Druck erfolgt. Dadurch werden die magnetischen Aufzeichnungsträger unbrauchbar, sie schmieren, an Aufnahme- und Wiedergabeköpfen bilden sich Ablagerungen oder die Bänder blocken bei hoher Luftfeuchtigkeit, insbesondere in Verbindung mit hoher Temperatur.

Um diese Fehler zu vermeiden, ist es erforderlich, daß außer der Verwendung besonders geeigneter Magnetpigmente, die in den Magnetschichten insgesamt enthaltenen Materialien so ausgewählt werden, daß die Magnetschichten eine besonders hohen Magnetisierung in der Aufzeichnungsrichtung und bei den geforderten glatten Oberflächen auch die zwingend notwendigen mechanischen Eigenschaften aufweisen. Gerade die Verbesserung der genannten Eigenschaften, wie gleichmäßige Oberflächenrauhigkeit, bei guter Remanenz und Ausrichtungsgrad sowie die Gewährleistung hervorragender mechanischer Eigenschaften sind bei ein und demselben magnetischen Material im hohen Maße von der Herstellung der Magnetschicht, des verwendeten Bindemittels und der Zusatzstoffe abhängig. Unter Zusatzstoffen sind in erster Linie die sogenannten Gleitmittel, Hydrophobierungsmittel und Dispergierhilfsmittel zu verstehen, welche wesentlichen Einfluß auf die elektroakustischen, magnetischen und mechanischen Eigenschaften der magnetischen Aufzeichnungsträger ausüben.

Die Verminderung der Oberflächenrauhigkeit der Magnetschicht ist bei hochwertigen magnetischen Aufzeichnungsträgern besonders wichtig, da für die Auflösung kleinster Wellenlängen ein besonders guter Band/Kopf-Kontakt erforderlich ist. Daraus ergeben sich die hohen Anforderungen, die an die Gleiteigenschaften bzw. Verschleißfestigkeit der Bänder gestellt werden, da eine Beschädigung der Magnetschicht sofort zu Pegeleinbrüchen führt.

Zur Lösung dieser Probleme wurden bisher sehr viele Wege beschritten, wie der Zusatz von Hydrophobierungsmitteln, nachträgliches Aufbringen von Gleitmitteln auf die Magnetschicht, Erhöhung der Oberflächenhärte der Magnetschicht durch Vernetzung und den Zusatz unmagnetischer Pigmente, Bindemittelkombinationen aus zwei bis vier Lackkomponenten, die ggf. zusätzlich vernetzt werden können. Die Vielzahl der bisher vorgeschlagenen Maßnahmen weisen oft erhebliche verfahrenstechnische Mängel auf, d.h. sie erfüllen die Anforderungen nicht oder nur ungenügend. Besonders hohe Anforderungen werden in zunehmendem Maße an die Laufeigenschaften der magnetischen Aufzeichnungsträger unter extremen Klimabedingungen, besonders bei hoher Luftfeuchtigkeit und hoher Temperatur gestellt. Eine Lösung dieser Probleme wurde vielfach mit Hilfe des Zusatzes kleiner Mengen an speziellen Gleitmitteln oder auch Füllstoffen, die bei der Dispergierung der magnetischen Materialien oder bei der Herstellung der Magnetschichten zugemischt wurden, versucht. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin, sowie Fettsäureester, Fettsäureamide, Siliconöle oder auch Ruß. Diese Produkte bringen besonders in Kombination sehr gute Laufeigenschaften bei üblichen Klimabedingungen. Unter extremen Klimabedingungen sind selbst bei Verwendung spezieller Bindemittelsysteme, wie sie z.B. für hochaussteuerbare Audio- und Videobänder eingesetzt werden, solche Bänder beim Betrieb in hoher Luftfeuchtigkeit und einer Temperaturbelastung bis 85°C nur bedingt geeignet. So konnten durch die Kombination von üblichen niedermolekularen flüssigen, stark verzweigten oder festen, linearen Paraffinen mit einem Schmelzpunkt unter 80°C - keine Magnetbänder hergestellt werden, die unter vorbeschriebenen Bedingungen alle geforderten Eigenschaften wie z.B. gute Trennwirkung der Bandlagen nach Temperaturlagerung, gute Gleitwirkung, hoher Durchlaßwiderstand für Wasser-Hydrophobierung der Schicht, erhöhte Kratzfestigkeit, Unlöslichkeit im verwendeten Lösemittel, Verringerung des Kopfabschliffs, gute Dispergierbarkeit, in sich vereinen. Auch durch den Einsatz von nichtmagnetischen anorganischen Pigmenten, wie ZnO-, SiO₂-, Al₂O₃-, F₂O₃-, FeOOH-Pulver konnten bei Lagerung unter Tropenbedingungen oder bei 85°C die Gebrauchseigenschaften, wie z.B. kein Verkleben der Bandlagen, kein Schmieren, niedriger Abrieb, schlechte Benetzung mit Wasser nicht erreicht werden.

Es bestand daher die Aufgabe, magnetische Aufzeichnungsträger bereitzustellen, die ohne Einbußen bei den magnetischen Eigenschaften eine Verbesserung der Gebrauchseigenschaften wie geringerer Kopfabschliff, geringere Wasseraufnahme, erhöhte Kratzfestigkeit, geringere Bandlaufschwankungen auch bei hohen und wechselnden Temperaturbelastungen und Luftfeuchtigkeiten, d.h. keine Beeinträchtigungen in den mechanischen Eigenschaften zeigen.

Es wurde nun gefunden, daß mit magnetischen Aufzeichnungsträgern, erhalten durch Herstellen einer Dispersion von anisotropem magnetischem Material und üblichen Zusatzstoffen in einer Lösung eines polymeren Bindemittels in einem organischen Lösungsmittel, schichtförmiges Auftragen der Dispersion auf ein nichtmagnetisierbares Trägermaterial, anschließendes Ausrichten des anisotropen magnetischen Materials in einem Magnetfeld und Verfestigen der aufgebrachten Magnetschicht die Aufgabe gelöst werden kann, wenn ein feinteiliges organisches, hydrophobes Stützpigment, das in dem verwendeten Lösungsmittel unlöslich ist und einen Schmelzpunkt von mehr als 90°C hat, in einer Menge von 0,1 bis 8 Gew.-% in Kombination mit 0,1 bis 1,5 Gew.-% hochviskosem Polysiloxan mit einer Viskosität von 10 000 bis 500 000 mPas, jeweils bezogen auf die Menge an magnetischem Material, in der Magnetschicht enthalten ist.

Als feinteilige organische Stützpigmente für die erfindungsgemäßen magnetischen Aufzeichnungsträger eignen sich Polyethylene oder Polypropylene mit einem Molekulargewicht von 2000 bis 10000, bevorzugt von 2500 bis 7000, wenn sie in dem für die Magnetdispersion verwendeten Lösungsmittel unlöslich sind und einen Schmelzpunkt (Monoskop) von >90°C aufweisen. Als besonders günstig haben sich feinmikronisierte, kugelförmige Polyethylene/Polypropylene mit einem Teilchendurchmesser von kleiner 30 µm, insbesondere von kleiner 10 µm, und einem Schmelzpunkt von >95°C erwiesen. Günstig ist auch, wenn die Pigmente eine Härte (Höppler-Härte bei 23°C nach D6F-M-IN 8) von >150 bar bis 400 bar aufweisen.

Ebenfalls geeignet sind auch Copolymerisate oder Umsetzungsprodukte auf der Basis von Polyethylen, wie Ethylen-Acrylsäurepolymere, Ethylen-Vinylacetatpolymere, oxydierte Polyethylene, sofern die vorbeschriebenen Randbedingungen, d.h. FP > 90°C, unlöslich in dem verwendeten Lösungsmittel, Feinteiligkeit, MG 2000 bis 10000, eingehalten werden.

Die neben den bezeichneten organischen Stützpigmenten in der Magnetschicht enthaltenen hochmolekularen Polysiloxane weisen vorzugsweise eine Viskosität von 10 000 bis 100 000 und insbesondere von 20 000 bis 80 000 mPas auf, wobei der Anteil vorteilhafterweise 0,15 bis 0,75 Gew.-%, bezogen auf das magnetisierbare Material, beträgt. Empfehlenswert sind Polysiloxane auf der Basis der Dimethylsiloxane.

Durch die Zusatzstoffe können insbesondere unter extremen Umgebungsbedingungen, wie z.B. hoher Luftfeuchtigkeit und/ oder hohen Temperaturen, die ungünstigen Gebrauchseigenschaften, wie Verkleben und Schmieren, der Aufzeichnungsträger verhindert werden. Bisher wurden, wie in der Lackverarbeitung bekannt, bevorzugt niedermolekulare oder chemisch modifizierte Siliconöle eingesetzt. Hochmolekulare Polydimethylsiloxane sind sehr schwer löslich und unverträglich. Dies führt zu starker Kraterneigung und zu sogenanntem Hammerschlag-Effekt. Umso überraschender war es daher, daß in Kombination mit den feinteiligen organischen Stützpigmenten die Verlaufsstörungen deutlich verbessert wurden und die bei Verwendung von niedermolekularen Siliconölen oder modifizierten Siliconölen bekannten Nachteile im Laufverhalten, z.B. Wow und Flutter, nicht auftraten.

Aufbau und Herstellung der erfindungsgemäßen magetischen Aufzeichnungsträger erfolgt in bekannter Weise.

Als magnetisches Material werden bevorzugt feinteiliges stäbchenförmiges Ganana-Eisen(III)oxid mit einer durchschnittlichen Teilchengröße von 0,1 bis 2 µm und insbesondere von 0,1 bis 0,9 µm, oder stäbchenförmiges Chromdioxid der gleichen Teilchenstruktur, wie beim Eisenoxid angegeben, verwendet. Weitere geeignete Materialien sind Gamma-Eisen(III)oxid mit Dotierungen von Schwermetallen, insbesondere von Kobalt sowie feinteilige Metallegierungen von Eisen, Kobalt und/oder Nickel. Besonders geeignet ist feinteiliges Chromdioxid. Ebenfalls geeignet sind Pigmentmischungen.

Die die magnetisierbare Schicht bildenden Bindemittel bestehen zu mindestens 40 Gew.-% aus Polyurethanen. Hierfür kommen beispielsweise lösungsmittelhaltige Polyurethanelastomere in Frage, wie sie z.B. in der DE-B 11 06 959 oder in der DE-B 27 53 694 beschrieben sind. Weitere geeignete Polyurethane sind in den DE-A 32 26 995, 32 27 163 und 32 27 164 offenbart. Die Polyurethane können dabei als alleinige Bindemittel oder vorzugsweise in Abmischungen mit anderen Polymeren (wie z.B. Polyvinylformale, Phenoxyharze, PVC-Copolymerisate) verwendet werden. Von der zweiten Bindemittelkomponente werden vorzugsweise 10 bis 40 Gew.-% zugesezt. Bei diesen Bindemitteln ist es von besonderem Vorteil, daß ganz oder teilweise auf zusätzliche Dispergiermittel verzichtet werden kann.

Eine gegebenenfalls, je nach Bindemittelsystem und Bandeigenschaftsprofil, erforderliche Vernetzung der magnetischen Aufzeichnungsträger ist die Umsetzung der Polyurethane oder Polyurethanbindemittelgemische mit Polyisocyanaten. Für die Vernetzung kann eine Vielzahl organischer Di-, Tri- oder Polyisocyanate oder Isocyanatprepolymere bis zu einem Molgewicht von 10 000, vorzugsweise zwischen 500 und 3 000, verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- oder Triole oder durch Biuret- und Isocyanuratbildung entstehen, erwiesen. Besonders günstig ist ein Additionsprodukt von Toluylendiisocyanat an Trimethylolpropan und Diethylenglykol. Die eingesetzte Menge an Polyisocyanat ist dabei dem jeweiligen Bindemittelsystem anzupassen.

Als Lösungsmittel werden je nach eingesetztem Bindemittel Wasser, cyclische Ether, wie Tetrahydrofuran und Dioxan, und cyclische Ketone, wie Cyclohexanon, verwendet. Die Polyurethane sind auch in anderen stark polaren Lösungsmitteln, wie Dimethylformamid, N-Methylpyrrolidon, Dimethylsulfoxid oder Ethylglykolacetat löslich. Ebenso ist es möglich, die genannten Lösungsmittel mit Aromaten, wie Toluol oder Xylol und Estern, wie Ethyl- oder Butylacetat, zu mischen.

Den Dispersionen aus magnetischem Material und Bindemittel werden im allgemeinen weitere Zusatzstoffe zur Verbesserung der Magnetschicht zugesetzt. Beispiele solcher Zusätze sind Fettsäuren, Polycarbonsäuren, Mono-, Di- oder Polysulfonsäuren bzw. Phosphorsäuren, deren Gemische, Ester oder Salze mit Metallen der ersten bis vierten Gruppe im Periodensystem, Lecithine, Fluorcarbone, außerdem Füllstoffe, wie Ruß, Graphit, Quarzmehl und/oder nicht magnetisierbares Pulver auf Silicatbasis oder Eisenoxidbasis. Üblicherweise liegen solche Zusätze insgesamt unter 10 Gew.-%, bezogen auf die Magnetschicht.

Der für die erfindungsgemäßen magnetischen Aufzeichnungsträger kennzeichnende Anteil an organischem Stützpigment wird durch Zugabe dieser Substanzen vor oder am Ende der Dispergierung erreicht. Ebenfalls geeignet sind Pigmentpasten, die zur Magnetdispersion gemischt werden. Dadurch läßt sich eine gute und gleichmäßige Verteilung erreichen. Werden zum Aufbau der magnetisierbaren Schicht weitere an sich übliche Zusatzstoffe benutzt, die neben anderen Effekten, wie Verbesserung der Gleiteigenschaften und des Verlaufs, auch die Dispergierung begünstigen, so bleiben die vorteilhaften Eigenschaften durch die Zugabe der erfindungsgemäßen Zusätze erhalten. Die Zumischung des hochmolekularen Polysiloxans erfolgt kurz vor dem Auftrag der Dispersion auf das Trägermaterial.

Die Herstellung der magnetisierbaren Schichten erfolgt in bekannter Weise. Hierzu wird das magnetische Material mit dem verwendeten Bindemittel und ausreichend Lösungsmittel in einer Dispergiermaschine, z.B. einer Topfkugelmühle oder einer Rührwerkskugelmühle, unter Zusatz gegebenenfalls der weiteren Zusatzstoffe dispergiert. Zur Einstellung des zweckmäßigen Bindemittel-Pigment-Verhältnisses können diese der Mischung entweder in festem Zustand oder in Form von 10 bis 60 %igen Lösungen bzw. 20 bis 60%igen Dispersionen zugegeben werden. Es hat sich als zweckmäßig erwiesen, die Dispergierung solange fortzuführen, bis eine extrem feine Verteilung des magnetischen Materials erreicht ist, was 1 bis 5 Tage erfordern kann. Durch anschließendes wiederholtes Filtrieren erhält man eine völlig homogene Magnetdispersion. Gegebenenfalls erforderliche Vernetzungsmittel werden vor der Beschichtung zur Dispersion gegeben.

Die Magnetdispersion wird nun mit Hilfe üblicher Beschichtungsmaschinen, z.B. mittels eines Linealgießers, auf den nichtmagnetischen Träger aufgetragen. Als nichtmagnetische Träger lassen sich die üblichen Trägermaterialien verwenden, insbesondere von 6 bis 36 µm. Bevor die noch flüssige Beschichtungsmischung auf dem Träger getrocknet wird, was zweckmäßigerweise bei Temperaturen von 50 bis 100°C während 0,2 bis 5 Minuten geschieht, werden die anisotropen Magnetteilchen durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Anwendung von Druck und Temperaturen von 20 bis 100°C, vorzugsweise 40 bis 80°C, geglättet und verdichtet werden. Die Dicke der Magnetschicht beträgt im allgemeinen 1 bis 20 µm, vorzugsweise 2 bis 12 µm.

Die erfindungsgemäßen Aufzeichnungsträger zeichnen sich gegenüber solchen, welche die organischen Stützpigmente und das Polysiloxan nicht in der Magnetschicht enthalten, durch eine deutlich verbesserte Stabilität gegen den durch Feuchtigkeit und oxidierbare Verbindungen bedingten chemischen Abbau aus. Dies bedeutet, daß insbesondere die unerwünschte, die magnetischen Eigenschaften stark beeinträchtigende Zersetzung zum Beispiel bei einer Verwendung von Chromdioxid die Disproportionierung zu Chromat- und Chrom(III)ionen, unterdrückt wird.

Die Erfindung wird anhand der folgenden Beispiele im Vergleich zu Versuchen nach dem Stand der Technik näher erläutert. Die in den Beispielen und Vergleichsversuchen genannten Teile und Prozente beziehen sich, soweit nicht anders angegeben ist, auf das Gewicht. Die Messung der magnetischen Eigenschaften erfolgte mit einem Schwingmagnetometer in einem Meßfeld von 100 kA/m. Bestimmt wurde die Koerzitivfeldstärke H_{c} in [kA/m], die remanente Magnetisierung Mᵣ und die Sättigungsmagnetisierung Mₘ in [mT] sowie der Richtfaktor Rf, das ist das Verhältnis der remanenten Magnetisierung längs zur Laufrichtung zu derjenigen quer dazu. Außerdem wurde an den magnetischen Aufzeichnungsträgern die Stabilität durch Messung der Chromat-Bildung gemäß dem Eluat-Test nach DIN 38 414/S4 und einer Gesamtchrom-Bestimmung an dem genannten Eluat untersucht.

### Beispiel 1

In einer Stahlkugelmühle üblicher Bauart mit Stahlkugeln als Mahlkörper, wurden 100 Gew.-Teile ferromagnetischen Chromdioxids mit einer mittleren Teilchengröße von 0,5 µm und einem Verhältnis Länge zu Dicke von 4:1 zusammen mit 33,9 Gew.-Teilen einer 16,5%igen Lösung eines Polyurethanelastomeren, 5,6 Gew.-Teile einer 20%igen Lösung eines Polyvinylformals, bestehend aus 82 % Vinylformal-, 12 % Vinylacetat- und Vinylalkoholeinheiten, 0,5 Gew.-Teile N-Talgfett-1,3-Diaminoleat, 2 Gew.-Teile Zn-stearat, 0,6 Gew.-Teile Leinölfettsäure, 87 Gew.-Teile Tetrahydrofuran, Dioxan 1:1, sowie 1 Gew.-Teil eines kugelförmigen Polyethylens mit einem Molekulargewicht von 5500, einem Schmelzpunkt von 98°C und einem mittleren Teilchendurchmesser von 15 µm und 0,5 Gew.-Teile Polydimethylsiloxan (Viskosität 60.000 mPas) 72 Std. dispergiert.

Anschließend wurde zu dieser vor gemahlenen Dispersion ein Gemisch aus 50,5 Gew.-Teilen der 16,5 %igen Polyurethanelastomerlösung, 8,33 Gew.-Teile der 20 %igen Polyvinylformallösung, 28,8 Gew.-Teile Tetr./Dioxan 1:1 sowie 0,25 Gew.-Teile eines Ölsäure/Stearinsäuregemisches zugegeben und weitere 2 Std. dispergiert.

Die so erhaltene Magnetbanddispersion wurde mit 6,7 Gew.-Teilen eines 50 %igen Triisocyanats, bestehend aus 3 Molen Toluylendiisocyanats und 1 Mol Trimethylpropan versetzt, kräftig durchgerührt und anschließend durch ein Filter mit 3 µm Porenweite filtriert.

Mit einem Linealgießer wurde eine 7,5 µm starke Polyethylentetrephthalfolie mit dieser Dispersion beschichtet und nach Durchlaufen eines Magnetfeldes die Beschichtung anschließend bei 80°C getrocknet. Durch Hindurchführen zwischen beheizten Walzen (70°C, Liniendruck 200 kg/cm) wurde die Magnetschicht verdichtet und geglättet. Die resultierende Magnetschicht betrug 5 µm. Die so beschichtete Folie wurde anschließend in Bänder von 3,81 mm Breite geschnitten.

### Beispiel 2

Es wurde wie im Beispiel 1 beschrieben verfahren, jedoch wurde die Menge des Polyethylens von 1 auf 0,5 Gew.-Teile reduziert.

### Vergleichsversuch 1

Es wurde wie im Beispiel 1 beschrieben verfahren, jedoch ohne Zusatz des Polyethylens.

### Beispiel 3

Es wurde wie im Beispiel 1 beschrieben verfahren, jedoch wurden 1,2 Gew.-Teile eines kugelförmigen Polyethylens mit einem Molekulargewicht von 5500, einem Schmelzpunkt von 101°C und einem mittleren Teilchendurchmesser von 6 µm zugesetzt.

### Vergleichsversuch 2

Es wurde wie im Beispiel 1 beschrieben verfahren, jedoch wurde das Polyethylen durch ein solches mit einem Molekulargewicht von 1000, einem Schmelzpunkt von 88°C und einer Teilchengröße von 60 µm ersetzt.

### Vergleichsversuch 3

Es wurde wie im Beispiel 3 beschrieben verfahren, jedoch wurde anstatt des Polydimethylsiloxans mit einer Viskosität von 60 0.00 mPas ein solches mit 600 mPas verwendet.

### Vergleichsversuch 4

Bei der Magnetschicht gemäß Beispiel 3 wurde anstelle des Polyethylens ein in THF/Dioxan löslicher Polyvinylether mit einem Schmelzpunkt von 48°C und einem mittleren Molekulargewicht von 3500 eingesetzt.

### Beispiel 4

Es wurde wie im Beispiel 3 beschrieben verfahren, jedoch wurde statt des Polydimethylsiloxans mit einer Viskosität von 60.000 mPas eines mit 500.000 mPas eingesetzt.

### Vergleichsversuch 5

Es wurde wie im Beispiel 3 beschrieben verfahren, jedoch wurde statt des Polydimethylsiloxans mit einer Viskosität von 60.000 mPas eines mit 100 mPas verwendet.

### Vergleichsversuch 6

Das Beispiel 4 wurde ohne Zusatz an Polydimethylsiloxan wiederholt.

### Vergleichsversuch 7

Es wurde wie im Beispiel 4 beschrieben verfahren, jedoch ohne Zusatz des Polyethylens.

Die aus den Beispielen und Vergleichsversuchen resultierenden Bänder wurden folgenden Tests unterzogen:

### Test 1

### Verklebungsneigung nach Warmlagerung

Bei diesem Test wird geprüft, welche Kraft notwendig ist, µm evtl. auftretende Verklebungskräfte Schicht/Folie beim Abwickeln zu überwinden.

Dazu wurde das zu prüfende Band in eine Compactcassette (Typ C 90) konfektioniert, unter definiertem Drehmoment aufgewickelt, 8 h bei 85°C gelagert und anschließend ungebremst die auftretenden Verklebungskräfte gemessen. Als Vergleichswert dient jeweils die in unmittelbarer Kernnähe auftretende maximale Rückhaltekraft (Angabe in cN).

### Test 2

### Wow + Flutter nach Warmlagerung

Compactcassetten mit schlechten Laufeigenschaften neigen nach Warmlagerung zu erhöhtem Wow + Flutter. Besonders kritisch ist dabei das erste Abspielen nach der Warmlagerung. Gemessen wurde das Wow + Flutterverhalten nach IEC 386, Maß für Geschwindigkeitsschwankungen (Angabe Modulation [%]).

### Test 3

### Eluatwert

Der Eluatwert in mg/l wurde gemäß DIN 38 414, Seite 4 bestimmt.

### Test 4

### Tropentauglichkeit

Prüfung der Abriebfestigkeit von Prüfbändern bezüglich Ablagerungen am Aufnahme/Wiedergabekopf (AWK) und Capstan nach Lagerung und Prüfung in einem feuchtwarmen Klima. Ermittlung der Blockierrate.

### Lagerbedingungen

- Lagerzeit:: 4 Wochen
- Lagerklima:: 40°C, 93 % r.F.
- Prüfling:: 10 Stück C 60, C 90 oder C 120

### Prüfbedingungen

- Prüfgerät:: Verwendung von 10 Laufwerken mit je einem AWK mit MU-Metall-Kopfsiegel
- Bandgeschwindigkeit:: 9,5 cm/sec
- Prüfling:: Die unter den oben beschriebenen Bedingungen gelagerten Cassetten
- Prüfzeit:: 10 Cassettendurchläufe
- Prüfklima:: 30°C, 93 % r.F., Akklimatisation im Prüfklima min. 8 Std.

Die aus dem Lagerklima entnommenen CC werden im Wiedergabebetrieb auf dem Prüfgerät betrieben. Nach beendetem Durchlauf wird die CC gewendet und wieder gestartet. Dieser Vorgang wird bis zum 10. Durchlauf wiederholt, die einzelnen CC verbleiben immer auf dem gleichen Prüfgerät.

Die Ablagerungen am AWK und Capstan werden getrennt jeweils nach dem ersten und zehnten Durchlauf gewertet (Noten 1 bis 6, wobei 1 = kein Abrieb und 6 = starker Abrieb bedeuten).

### Test 5

### Pegelstabilität

Prüfung der Pegelstabilität von Prüfbändern bei 100 Durchläufen sowie Beurteilung der Abriebfestigkeit des Prüfbandes durch Beurteilung der Ablagerungen an Löschkopf (LK), AWK und Capstan.

### Prüfbedingungen:

- Prüfgerät:: Trio (Kenwood) 3-Kopf-Recorder
- Bandgeschwindigkeit:: 4,75 cm/sec
- Aufgezeichnete Frequenz:: 8 kHz
- Anzahl der Cassettendurchläufe:: 100
- Pegelschreiber:: Fa. Bruel u. Kjear, Typ 2305
- Prüfklima:: 23°C, 50 % r.F., Akklimatisation im Prüfklima min. 1 Std.

Bei jedem Durchlauf wird bei -7 dB Aussteuerung entsprechend dem jeweiligen Arbeitspunkt ein 8 kHz Signal aufgezeichnet und hinter Band von dem Pegelschreiber wieder registriert.

Beurteilt wird die Anzahl der Durchläufe welche keine Pegeleinbrüche > 2 dB bzw. > 6 dB aufzeigen.

Die Ablagerungen an LK, AWK und Capstan werden nach einer vorliegenden Tabelle bewertet (Noten 1 bis 6).

### Test 6

### Beschichtungsbild

Hierbei wird die Oberfläche der Magnetschicht auf Störungen, wie Kraterbildung oder Orangenschalenstruktur untersucht.

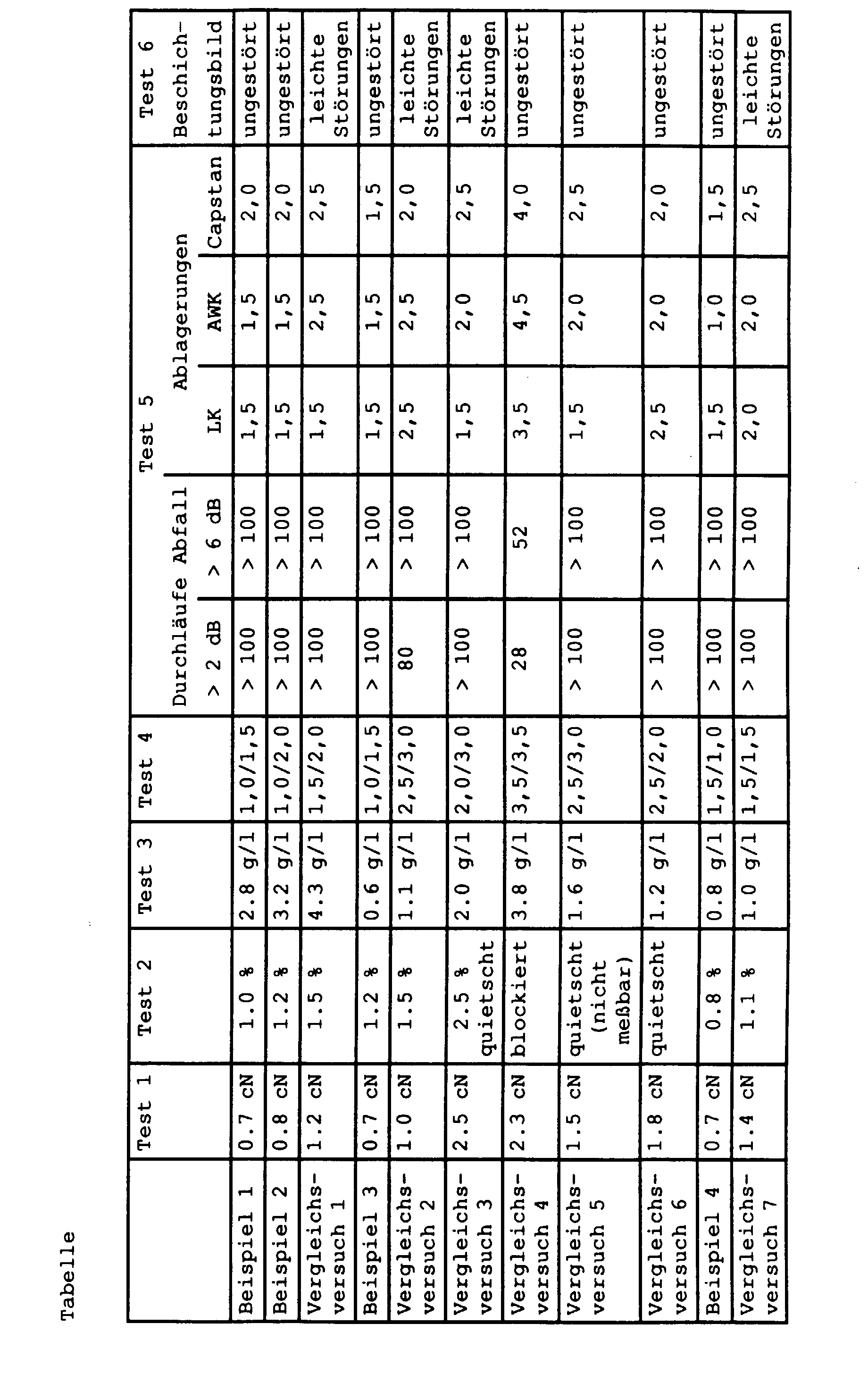

## Patentansprüche

1. Magnetische Aufzeichnungsträger, erhalten durch Herstellen einer Dispersion von anisotropem magnetischem Material und Zusatzstoffen in einer Lösung eines polymeren Bindemittels in einem organischen Lösungsmittel, schichtförmiges Auftragen der Dispersion auf ein nichtmagnetisierbares Trägermaterial, anschließendes Ausrichten des anisotropen magnetischen Materials in einem Magnetfeld und Verfestigen der aufgebrachten Magnetschicht, dadurch gekennzeichnet, daß ein feinteiliges organisches, hydrophobes Stützpigment, das in dem verwendeten Lösungsmittel unlöslich ist und einen Schmelzpunkt von mehr als 90°C hat, in einer Menge von 0,1 bis 8 Gew.-% in Kombination mit 0,1 bis 1,5 Gew.-% hochviskosem Polysiloxan mit einer Viskosität von 10 000 bis 500 000 mPas, jeweils bezogen auf die Menge an magnetischem Material, in der Magnetschicht enthalten ist.

2. Magnetische Aufzeichnungsträger gemäß Anspruch 1, dadurch gekennzeichnet, daß das feinteilige organische Stützpigment ein Polyethylen oder Polypropylen mit einem Molekulargewicht von 2000 bis 10 000 einen kugelförmigen Teilchendurchmesser von kleiner 30 µm sowie einen Schmelzpunkt von über 95°C aufweist.

## Claims

1. A magnetic recording medium obtained by preparing a dispersion of anisotropic magnetic material and additives in a solution of a polymeric binder in an organic solvent, applying the dispersion as a layer to a nonmagnetizable substrate, then orienting the anisotropic magnetic material in a magnetic field and solidifying the applied magnetic layer, wherein a finely divided organic, hydrophobic supporting pigment which is insoluble in the solvent used and has a melting point of more than 90°C is present in the magnetic layer in an amount of from 0.1 to 8% by weight in combination with from 0.1 to 1.5% by weight of highly viscous polysiloxane having a viscosity of from 10,000 to 500,000 mPa.s, the percentages in each case being based on the amount of magnetic material.

2. A magnetic recording medium as claimed in claim 1, wherein the finely divided organic supporting pigment is a polyethylene or polypropylene having a molecular weight of from 2,000 to 10,000, a spherical particle diameter of less than 30 µm and a melting point of more than 95°C.

## Revendications

1. Supports magnétiques d'enregistrement obtenus par production d'une dispersion de matériau magnétique anisotrope et d'additifs dans une solution d'un liant polymère dans un solvant organique, application en couche de cette dispersion sur un substrat non aimantable, puis orientation du matériau magnétique anisotrope dans un champ magnétique et solidification de la couche magnétique appliquée, caractérisés par le fait que la couche magnétique contient de 0,1 à 8 % en masse d'un pigment support organique à éléments fins hydrophobe qui est insoluble dans le solvant utilisé et a un point de fusion supérieur à 90 °C, en combinaison avec 0,1 à 1,5 % en masse de polysiloxane de haute viscosité ayant une viscosité de 10 000 à 500 000 mPa.s, les pourcentages indiqués étant relatifs à la quantité de matériau magnétique.

2. Supports magnétiques d'enregistrement selon la revendication 1, caractérisés par le fait que le pigment support organique à éléments fins est un polyéthylène ou un polypropylène de masse moléculaire comprise entre 2000 et 10 000, d'un diamètre de particules sphériques inférieur à 30 m et d'un point de fusion supérieur à 95 °C.
